(19) Europäisches Patentamt
European Patent Office
Office européen des brevets

(11) **EP 4 450 667 A1**

(12) **EUROPEAN PATENT APPLICATION**
published in accordance with Art. 153(4) EPC

(43) Date of publication:
**23.10.2024 Bulletin 2024/43**

(21) Application number: **22908023.9**

(22) Date of filing: **16.12.2022**

(51) International Patent Classification (IPC):
**C22C 38/04** (2006.01)    **C22C 38/00** (2006.01)
**C22C 38/06** (2006.01)    **C22C 38/60** (2006.01)
**C21D 8/02** (2006.01)    **C23C 2/06** (2006.01)
**B21C 47/02** (2006.01)

(52) Cooperative Patent Classification (CPC):
**B21C 47/02; C21D 8/02; C22C 38/00; C22C 38/04; C22C 38/06; C22C 38/60; C23C 2/06**

(86) International application number:
**PCT/KR2022/020640**

(87) International publication number:
**WO 2023/113558 (22.06.2023 Gazette 2023/25)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **16.12.2021 KR 20210180588**

(71) Applicant: **POSCO Co., Ltd**
**Pohang-si, Gyeongsangbuk-do 37859 (KR)**

(72) Inventor: **LEE, Byoung Ho**
**Pohang-si, Gyeongsangbuk-do 37859 (KR)**

(74) Representative: **Meissner Bolte Partnerschaft mbB**
**Patentanwälte Rechtsanwälte**
**Postfach 86 06 24**
**81633 München (DE)**

(54) **COLD-ROLLED STEEL SHEET AND GALVANIZED STEEL SHEET WITH EXCELLENT PRESS FORMABILITY AND METHOD OF MANUFACTURING THEREOF**

(57)    A cold-rolled steel sheet, according to one embodiment of the present invention, may comprise in percentage by weight: carbon (C): 0.010-0.025%; manganese (Mn): 0.10-0.25%; sulfur (S): 0.002-0.011%; boron (B): 0.0006-0.0026%; nitrogen (N): 0.0010-0.0034%; aluminum (Al): 0.006-0.028%; and the balance being Fe and unavoidable impurities, and may comprise precipitates of at least one of MnS and BN, wherein the average particle diameter of the precipitates may be 40-250 nm, the area fraction of the precipitates in the cold-rolled steel sheet may be 1-10%, and the yield strength may be 150-220 MPa.

FIG. 1

**Description**

**[Technical Field]**

The present disclosure is used in a steel sheet for parts of electronic products and frames, and more particularly, relates to a cold-rolled steel sheet and a galvanized steel sheet having excellent press workability, and a manufacturing method thereof.

**[Background Art]**

Materials used for parts such as parts of home appliances, for example, refrigerator doors, washing machine frames, and TV back-panels are low carbon-based steel materials having a carbon content of 200 to 400 ppm, and are generally press-worked and subjected to forming of an embossing part, a bending part, and the like. Since the formed material as such serves to support a product, it requires strength at or above a certain level, and requires high formability for integrated forming.

Thinning of the materials for parts of home appliances is currently in progress, and as a more complicated forming method than before begins to be applied, forming problems such as crack occurrence during forming a conventional low-carbon-based steel material or distortion after forming are arising. In order to solve the problems, there is a demand to develop a steel material having excellent formability.

As one method for meeting the needs, a method which secures both strength and formability by using solid solution strengthening and precipitation strengthening of components such as manganese (Mn), silicon (Si), phosphorus (P), and titanium (tin) of an extremely low-carbon-based material having a carbon content of 40 ppm or less was suggested, but it complicated a manufacturing process and reduced material cost competitiveness. In addition, since various surface defects occur during product production by addition, there is a strong demand for a method of increasing press formability in an existing low-carbon-based material, not an extremely low-carbon based material.

**[Disclosure]**

**[Technical Problem]**

The present disclosure attempts to provide a cold-rolled steel sheet having excellent press workability to have no defect such as cracks during forming and having high strength.

In addition, the present disclosure attempts to provide a galvanized steel sheet having the above merits.

In addition, the present disclosure attempts to provide methods of manufacturing the cold-rolled steel sheet and the galvanized steel sheet having the above merits.

**[Technical Solution]**

An exemplary embodiment of the present disclosure provides a cold-rolled steel sheet including, by weight: 0.010 to 0.025% of carbon (C), 0.10 to 0.25% of manganese (Mn), 0.002 to 0.011 % of sulfur (S), 0.0006 to 0.0026% of boron (B), 0.0010 to 0.0034% of nitrogen (N), and 0.006 to 0.028% of aluminum (Al) with a balance of Fe and unavoidable impurities, and including a precipitate of at least one of MnS and BN, wherein an area fraction of the precipitate in the cold-rolled steel sheet is 1 to 10% and the cold-rolled steel sheet has a yield strength of 150 to 220 MPa.

In an exemplary embodiment, the cold-rolled steel sheet may satisfy the following Equation 1:

$$\text{<Equation 1>}$$

$$100{,}000 \times \min([B]/10.8, [N]/14) > 9.25$$

wherein min (a, b) is a smaller value between a and b, and [B] and [N] are contents (wt%) of B and N.

In an exemplary embodiment, the cold-rolled steel sheet may satisfy the following Equation 2:

$$\text{<Equation 2>}$$

$$([N]-1.3 \times [B]) \times 9.643 < 0.015$$

wherein [B] and [N] are contents (wt%) of B and N.

In an exemplary embodiment, the cold-rolled steel sheet may satisfy the following Equation 3:

<Equation 3>

$$0 < T_{MnS} - T_{BN} < 100$$

wherein $T_{BN}$ is $573,198 \times \min ([B]/10.8, [N]/14) +1142$, $\min (a, b)$ is a smaller value between a and b, $T_{MnS}$ is $15000 \times [S] +1170$, and [B], [N], and [S] are contents (wt%) of B, N, and S.

In an exemplary embodiment, the precipitate may have an average particle diameter of 40 to 250 nm. In an exemplary embodiment, ferrite may have an average particle diameter of 10 to 40 $\mu$m. In an exemplary embodiment, the cold-rolled steel sheet may have an elongation rate of 35 to 48%.

Another exemplary embodiment of the present disclosure provides a galvanized steel sheet which is obtained by hot-dip galvanizing the cold-rolled steel sheet described above.

Another exemplary embodiment of the present disclosure provides a method of manufacturing a cold-rolled steel sheet including: reheating a slab including, by weight: 0.010 to 0.025% of carbon (C), 0.10 to 0.25% of manganese (Mn), 0.002 to 0.011% of sulfur (S), 0.0006 to 0.0026% of boron (B), 0.0010 to 0.0034% of nitrogen (N), and 0.006 to 0.028% of aluminum (Al) with a balance of Fe and unavoidable impurities at 1,100°C or higher and lower than 1,250°C; hot rolling the heated slab to manufacture a hot-rolled steel sheet; winding the hot-rolled steel sheet at a winding temperature in a range of 450 to 700°C; cold rolling the wound hot-rolled steel sheet to manufacture a cold-rolled steel sheet; annealing the cold-rolled steel sheet; and temper rolling the cold-rolled steel sheet at a rolling rate of more than 0.5% and less than 1.5%. In an exemplary embodiment, in the heating of a slab, the slab may be heated to 1,200°C or higher.

In an exemplary embodiment, in the manufacturing of a hot-rolled steel sheet, a finish rolling temperature may be Ar$_3$ or higher. In an exemplary embodiment, the manufacturing of a cold-rolled steel sheet may be performed by cold rolling at a reduction rate of 50 to 95% to manufacture the cold-rolled steel sheet. In an exemplary embodiment, after the manufacturing of a cold-rolled steel sheet, galvanizing a surface of the cold-rolled steel sheet may be further included.

**[Advantageous Effects]**

The cold-rolled steel sheet according to an exemplary embodiment of the present disclosure may produce an extremely thin cold-rolled steel sheet which has excellent workability from securing high strength and elongation rate and from which surface defects are removed, by minimizing a content of aluminum in steel and controlling contents of essential components such as boron and nitrogen, and may suppress defect occurrence in a bending part during bending working.

The galvanized steel sheet according to another exemplary embodiment of the present disclosure may have the merits described above.

The cold-rolled steel sheet and the galvanized steel sheet according to another exemplary embodiment of the present disclosure may have the merits described above.

**[Description of the Drawings]**

FIG. 1 illustrates composite precipitates of MnS and BN according to an exemplary embodiment of the present disclosure.

FIG. 2 illustrates a crystal grain size depending on whether a composition content range is included, according to an exemplary embodiment of the present disclosure.

FIG. 3 is a graph of changes in precipitation temperature of BN and MnS corresponding to changes in a content of sulfur (S), according to an exemplary embodiment of the present disclosure.

**[Mode for Invention]**

The terms such as first, second, and third are used for describing various parts, components, areas, layers, and/or sections, but are not limited thereto. These terms are used only for distinguishing one part, component, area, layer, or section from other parts, components, areas, layers, or sections. Therefore, a first part, component, area, layer, or section described below may be mentioned as a second part, component, area, layer, or section without departing from the scope of the present disclosure.

The terminology used herein is only for mentioning a certain example, and is not intended to limit the present disclosure. Singular forms used herein also include plural forms unless otherwise stated clearly to the contrary. The meaning of "comprising" used in the specification is embodying certain characteristics, areas, integers, steps, operations, elements, and/or components, but is not excluding the presence or addition of other characteristics, areas, integers, steps, operations, elements, and/or components.

When it is mentioned that a part is "on" or "above" the other part, it means that the part is directly on or above the other part or another part may be interposed therebetween. In contrast, when it is mentioned that a part is "directly on" the other part, it means that nothing is interposed therebetween.

Though not defined otherwise, all terms including technical terms and scientific terms used herein have the same meaning as commonly understood by a person with ordinary skill in the art to which the present disclosure pertains. Terms defined in commonly used dictionaries are further interpreted as having a meaning consistent with the related technical literatures and the currently disclosed description, and unless otherwise defined, they are not interpreted as having an ideal or very formal meaning.

In addition, unless particularly mentioned, % refers to wt%, and 1 ppm is 0.0001 wt%.

The meaning of further including an additional element in an exemplary embodiment of the present disclosure is including the additional element by replacing iron (Fe) as a balance by the additional amount of the additional element.

Hereinafter, an exemplary embodiment of the present disclosure will be described in detail so that those skilled in the art to which the present disclosure pertains may easily carry out the disclosure. As those skilled in the art would realize, the described embodiments may be modified in various different ways, all without departing from the spirit or scope of the present disclosure.

A cold-rolled steel sheet according to an exemplary embodiment of the present disclosure includes, by weight: 0.010 to 0.025% of carbon (C), 0.10 to 0.25% of manganese (Mn), 0.002 to 0.011% of sulfur (S), 0.0006 to 0.0026% of boron (B), 0.0010 to 0.0034% of nitrogen (N), and 0.006 to 0.028% of aluminum (Al) with a balance of Fe and unavoidable impurities.

Hereinafter, the reason for limiting alloy components will be described.

C: 0.010 to 0.025 wt%

Carbon (C) is an element which is solid-solubilized in steel and favorably improves strength, and since a carbide in a steel material is precipitated at a content of carbon from 0.020 wt%, as the C content increases in a range of 0.010 to 0.025 wt%, specifically 0.011 to 0.024 wt%, a section in which steel material quality changes occurs.

When the content of carbon is excessively small, the content of C which is solid-solubilized in steel is low, so that a solid solution strengthening effect becomes small and strength of a steel material is lowered. When the content of carbon is excessively high, solid solution strengthening restarts after the carbide is precipitated to the maximum, so that strength may be excessively increased and an age index may be increased.

Mn: 0.10 to 0.25 wt%

Manganese (Mn) is an element which serves to improve the strength of a steel material by solid solution strengthening in steel and is bonded to sulfur (S) to form a MnS precipitate. A content of manganese (Mn) may be 0.10 to 0.25 wt%. Specifically, the content of manganese may be 0.12 to 0.24 wt%.

In the present disclosure, it is preferred that the manganese is added at 0.10 wt% or more for securing strength by the manganese. When the content of manganese is excessively high, a center segregation zone is formed so that there is a concern about defects occurring during hot rolling, and an excessively coarse MnS precipitate is formed so that it is difficult to expect a composite precipitation effect with a BN precipitate, which may result in a decrease in strength of a steel material.

S: 0.002 to 0.011 wt%

Sulfur (S) is an element for forming a MnS precipitate with manganese (Mn). Since sulfur is less contained than the manganese, a content of S may dominate the entire MnS in the precipitation of MnS. The content of manganese may be 0.002 to 0.011 wt%. Specifically, the content of manganese may be 0.003 to 0.010 wt% (30 to 100 ppm).

When the content of sulfur is excessively low, the MnS precipitate is not sufficiently formed, so that it is difficult to expect a composite precipitation effect with the BN precipitate, and also, precipitates may be formed at a precipitation temperature of 1,200°C which is an average heating temperature or lower. When the content of sulfur is excessively high, a precipitation starting temperature is too high, and it may be difficult to expect a composite precipitation effect with the BN precipitate.

B: 0.0006 to 0.0026 wt%

Boron (B) is an element which reacts with nitrogen (N) in steel to form a BN precipitate, and has an effect of reducing nitrogen which is solid-solubilized in steel and an action of forming the size of final crystal grains to be coarse. A content of boron may be 0.0006 to 0.0026 wt%. Specifically, the content of boron may be 0.0011 to 0.0025 wt%.

When the content of boron is excessively low, an amount of the BN precipitate formed is very small, a precipitation temperature of the BN precipitate becomes 1,200°C or lower, and thus, BN which is formed in a hot rolling step in a heating temperature section is re-solid-solubilized to decrease an effect of reducing crystal grain boundary pinning. When the content of boron is excessively high, boron is segregated in a grain boundary of B remaining after being bonded to N in steel, so that it is highly likely to be present as free boron (free B), and in this case, a problem such as scab grooves may arise during steel making-soft cast, and finally boron is segregated in a grain boundary of the steel material to cause an adverse effect of excessively increasing strength.

N: 0.0010 to 0.0034 wt%

Nitrogen (N) is an element which reacts with boron (B) to form a BN precipitate. A content of nitrogen may be 0.0010 to 0.0034 wt%. Specifically, the content of nitrogen may be 0.0014 to 0.0030 wt%.

When the content of nitrogen is excessively low, an amount of BN to be precipitated is decreased, so that is may be difficult to express the BN coarse precipitation effect of the present disclosure. When the content of nitrogen is excessively high, nitrogen remaining after forming the BN precipitate is present in a solid-solubilized state, and causes excessive improvement of strength of steel and may increase an aging index.

Al: 0.006 to 0.028 wt%

Aluminum (Al) is an element added for a deoxidation effect. A content of aluminum may be 0.006 to 0.028 wt%. Specifically, the content of aluminum may be 0.010 to 0.028 wt%. When the content of aluminum is excessively low, the deoxidation effect may be reduced to form inclusion defects which bind to a composition such as manganese (Mn) and calcium (Ca).

The aluminum may be added for the purpose of inducing AlN formation at a low temperature in order to be solid-solubilized with nitrogen (N) and prevent aging. Since much nitrogen is removed in the form of BN using the boron in the present disclosure, there is no need to add a high content of aluminum (Al), as in a common cold-rolled steel sheet. Even in the case of adding only the aluminum within a content range of aluminum, solid-solubilized nitrogen which causes aging occurrence may be minimized.

In the present disclosure, a content of an alloy such as B, Mn, and S which are lower-priced elements is optimized by excluding higher-priced elements such as Nb, Ti, P, and Mn, and thus, a yield strength of the steel material used in press forming is lowered and ductility thereof is increased, thereby securing excellent press workability. Specifically, 0.01 wt% or less of Nb and Ti, respectively, 0.015 wt% or less of P, and 0.025 wt% or less of Mn may be included.

In an exemplary embodiment, the cold-rolled steel sheet includes iron (Fe) as a balance. In addition, unavoidable impurities may be included. The unavoidable impurities refer to impurities which are inevitably incorporated in steel making and the manufacturing process of the cold-rolled steel sheet. Since the unavoidable impurities are well known in the art, detailed description thereof will be omitted. In an exemplary embodiment of the present disclosure, addition of elements other than the alloy components described above is not excluded, and various elements may be included within a range hindering the technical ideas. When an addition element is further included, it replaces Fe as the balance.

The cold-rolled steel sheet according to an exemplary embodiment of the present disclosure satisfies the following Equation 1:

<Equation 1>

$$100{,}000 \times \min\left([B]/10.8, [N]/14\right) > 9.25$$

wherein min (a, b) is a smaller value between a and b, and [B] and [N] are contents (wt%) of B and N.

In an exemplary embodiment, the value of Equation 1 may be more than 9.25. Specifically, the value of Equation 1 may be more than 9.8 and less than 19.3. In an exemplary embodiment, Equation 1 may refer to minimum contents of boron (B) and nitrogen (N) of which the precipitation temperature is higher than the heating temperature with precipitate coarsening. Equation 1 relates to the minimum contents of boron (B) and nitrogen (N) for forming precipitates in order to control a yield strength low, by forming a BN precipitate to form a coarse precipitate. Since the boron and the nitrogen are met in an atom state, an atomic ratio may be, for example, 1:1. However, when some of the atoms are present in more amounts, other atoms present in small amounts may determine the amount of precipitate and the precipitation temperature of BN.

The cold-rolled steel sheet according to an exemplary embodiment of the present disclosure satisfies the following Equation 2:

<Equation 2>

$$([N] - 1.3 \times [B]) \times 9.643 < 0.015$$

wherein [B] and [N] are contents (wt%) of B and N.

In an exemplary embodiment, the value of Equation 2 may be less than 0.015. Specifically, the value of Equation 2 may be less than 0.009. More specifically, the value of Equation 2 may be more than -0.02 and less than 0.006.

$([N] - 1.3 \times [B]) \times 9.643$ of Equation 2 relates to a minimum content of Al required for nitrogen (N) scavenging. Specifically, when the nitrogen is not scavenged, for example, not removed by boron (B) and the atomic ratio of the nitrogen is higher, it is designed that the aluminum is not more than 0.015 wt% which is the lower limit for deoxidizing action. In an exemplary embodiment, the cold-rolled steel sheet satisfies Equation 2 to control the content of aluminum (Al) low, thereby providing the cold-rolled steel sheet having excellent economic feasibility.

The cold-rolled steel sheet according to an exemplary embodiment of the present disclosure satisfies the following Equation 3:

<Equation 3>

$$0 < T_{MnS} - T_{BN} < 100$$

wherein $T_{BN}$ is $573{,}198 \times$ min ([B]/10.8, [N]/14) +1142, min (a, b) is a smaller value between a and b, $T_{MnS}$ is $15000 \times$ [S] +1170, and [B], [N], and [S] are contents (wt%) of B, N, and S.

In Equation 3, $T_{BN}$ is a precipitation temperature of BN and $T_{MnS}$ is a precipitation temperature of MnS, and since the starting points of the precipitation temperature of MnS and the precipitation temperature of BN are similar to each other, the principle of formation of coarse precipitates included in the cold-rolled steel sheet is based on the fact that as MnS precipitates, the precipitated MnS acts as a precipitation nucleus for the BN.

In an exemplary embodiment, when the value of $T_{MnS} - T_{BN}$ of Equation 3 is less than the lower limit, re-solid solubilization occurs, so that it may be difficult to expect a composite precipitation effect of MnS and BN. When the value of $T_{MnS} - T_{BN}$ of Equation 3 is more than the upper limit, MnS is formed in a coarse state, and since the coarse MnS does not act as a nucleus of the BN precipitation, it may be difficult to expect the composite precipitation effect.

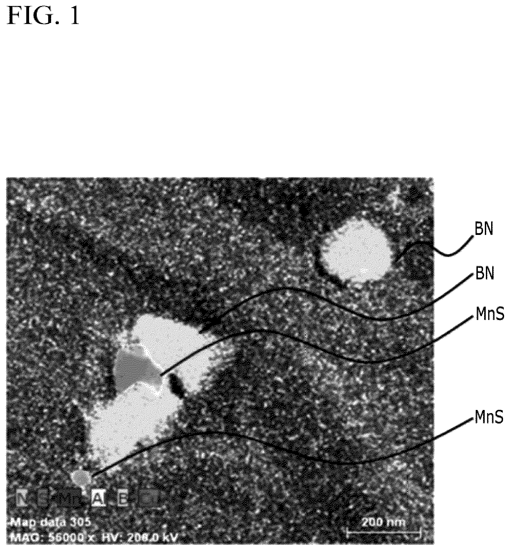

Referring to FIG. 1, in an exemplary embodiment, the cold-rolled steel sheet includes at least one precipitate of MnS and BN, and an area fraction of the precipitate may be 1 to 10%. Specifically, the area fraction may be 1.5 to 7%. When the area fraction is lower than the lower limit, precipitation strengthening occurs due to refinement of the formed precipitate, and thus, it is difficult to secure strength and workability to be desired. When the area fraction is higher than the upper limit, a strength increase effect due to precipitation strengthening occurs more than a crystal grain coarsening effect due to a coarse precipitate.

In an exemplary embodiment, an average particle diameter of the precipitate may be 40 to 250 nm. Specifically, the average particle diameter of the precipitate may be 50 to 200 nm. When the average particle diameter of the precipitate is excessively small, the crystal grain coarsening effect intended in the present disclosure is not obtained by formation of fine precipitate, and when the average particle diameter of the precipitate is excessively large, the total number of MnS produced is small, so that it may not serve as a precipitation nucleus of BN, and thus, formability of a steel material may be deteriorated.

In an exemplary embodiment, the yield strength of the cold-rolled steel sheet may be 150 to 220 MPa. Specifically, the yield strength of the cold-rolled steel sheet may be 160 to 220 MPa. The yield strength of the cold-rolled steel sheet is based on that measured by a 0.2% off-set method, and when the yield strength of the cold-rolled steel sheet is excessively low, strength is too low, so that performance supporting a product when used for the intended purpose in the present disclosure may be deteriorated. When the yield strength of the cold-rolled steel sheet is excessively high, distortion of a product may occur, and cracks are highly likely to occur in an embossing area or a bending area.

In an exemplary embodiment, an elongation rate of the cold-rolled steel sheet may be 35 to 48%. Specifically, the elongation rate of the cold-rolled steel sheet may be 39 to 46%. When the elongation rate of the cold-rolled steel sheet is excessively low, cracks are highly likely to occur during forming. However, since the excessively high elongation rate of the cold-rolled steel sheet means excessive decline in strength, there is a problem of stiffness deterioration.

In an exemplary embodiment, the cold-rolled steel sheet may include some carbides in a ferrite single phase structure as a microstructure. A fraction of the carbide may be, for example, 5% or less as an area fraction. When the fraction of the carbide is out of the range, it may be a starting point of crack occurrence in a steel material, and deterioration of the steel material may occur during a heat treatment. In an exemplary embodiment of the present disclosure, a ferrite single phase structure refers to that composed of a ferrite structure other than precipitates and carbides. That is, the ferrite structure may be 85% or more as an area fraction with respect to the entire steel sheet. More specifically, it may be 85 to 99%.

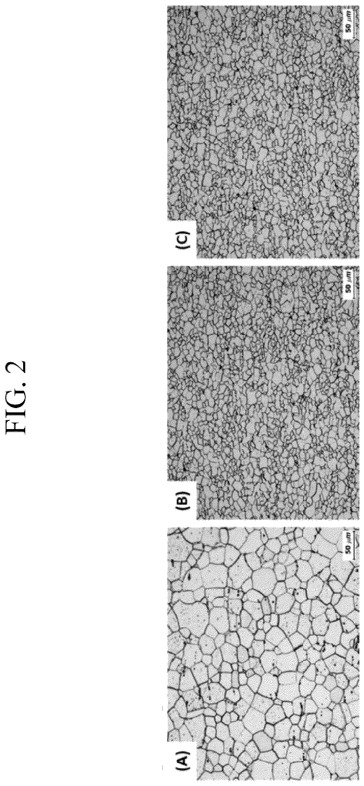

Referring to FIG. 2, in an exemplary embodiment, a crystal grain size of the ferrite may be 10 to 40 $\mu$m. In FIG. 2, crystal grain sizes when the cold-rolled steel sheet satisfies (A, Example 1 of Table 1 described later) or does not satisfies (B and C, Comparative Examples 6 and 8 of Table 1 described later, respectively) the composition range of the present disclosure may be confirmed. When the crystal grain size is excessively small, the strength is excessively increased as compared with the strength of the steel material to be desired in the present disclosure. When the crystal grain size is excessively large, defects such as orange peel are likely to occur in a worked area after working.

In an exemplary embodiment of the present disclosure, the cold-rolled steel sheet described above may be galvanized to obtain a galvanized steel sheet. Detailed description thereof will be described later for a method of manufacturing a cold-rolled steel sheet.

A method of manufacturing a cold-rolled steel sheet according to an exemplary embodiment of the present disclosure includes: reheating a slab including, by weight: 0.010 to 0.025% of carbon (C), 0.10 to 0.25% of manganese (Mn), 0.002 to 0.011% of sulfur (S), 0.0006 to 0.0026% of boron (B), 0.0010 to 0.0034% of nitrogen (N), and 0.006 to 0.028% of aluminum (Al) with a balance of Fe and unavoidable impurities; hot rolling the heated slab to manufacture a hot-rolled steel sheet; winding the hot-rolled steel sheet at a winding temperature in a range of 450 to 700°C; cold rolling the wound hot-rolled steel sheet to manufacture a cold-rolled steel sheet; and annealing the cold-rolled steel sheet. Since the alloy composition of the slab is the same as the cold-rolled steel sheet described above, overlapping description will be omitted. Since the alloy component is not changed in the manufacturing process of the cold-rolled steel sheet, the alloy compositions of the slab and the cold-rolled steel sheet are substantially the same.

The reheating of a slab is a step of heating a slab at a low temperature at which at least one precipitate of BN and MnS is not re-solid-solubilized. In an exemplary embodiment, the step of reheating a slab may be heating to a temperature of 1,150°C or higher. Since most of the precipitates present in steel should be re-solid-solubilized, a temperature of 1,150°C or higher may be needed. Specifically, in order to solid-solubilize the precipitate well, heating may be performed at a temperature of 1,200°C or higher, more specifically 1,200 to 1,250°C. By heating within the temperature range, a temperature may be sufficiently secured during hot rolling. When it is out of the upper limit of the temperature range, a fraction of the precipitate in the cold-rolled steel is excessively small and the particle size of the precipitate is small, so that the precipitate may be re-solid-solubilized.

In the hot rolling of the slab to manufacture a hot-rolled steel sheet, the slowly cooled slab is hot-rolled at a temperature of $Ar_3$ or higher to manufacture a hot-rolled steel sheet. The $Ar_3$ temperature is a third transformation temperature, which is a temperature of phase transformation of iron from ferrite or cementite to austenite, and may be calculated by the following equation:

$$Ar_3 \text{ temperature} = \text{wt\% of } 914.57 - 95.24 \times C - \text{wt\% of } 43.5 \times Mn - \text{wt\% of } 21.15 \times C \times \text{wt\% of } Mn - \text{wt\%}^{1/2} \text{ of } 128.6 \times C.$$

The reason for defining the finish temperature of the hot rolling is defined as $Ar_3$ or higher is for carrying out rolling in a single phase area. Specifically, the finish temperature of the hot rolling may be $Ar_3$ to 1,200°C, specifically $Ar_3$ to 1,000°C. The $Ar_3$ temperature may be, for example, 880 to 900°C.

In the hot rolling of the slab to manufacture a hot-rolled steel sheet, the manufactured hot-rolled steel sheet may be wound. In an exemplary embodiment, the hot-rolled steel sheet may be wound in a temperature range of 500 to 700°C. Specifically, the temperature range may be 600 to 700°C.

When the hot-rolled is wound in a temperature range lower than the above temperature range, the hot-rolled structure is coarsened and it is difficult to secure cold-rollability after hot rolling. When the hot-rolled steel sheet is wound in a temperature range higher than the temperature range, oxygen of scale produced on the surface of steel during winding and carbon in steel react to produce scale of which the surface is not pickled well, and thus, crystal orientation may be finally affected during galvanizing. In an exemplary embodiment, the wound hot-rolled steel sheet may be 2.0 to 5.0 mm as a non-limiting example.

In the hot rolling of the hot-rolled sheet to manufacture a cold-rolled steel sheet, the wound hot-rolled steel sheet may be cold-rolled at a reduction rate of 50%, specifically at reduction rate of 50 to 90% to manufacture a cold-rolled steel sheet. When the reduction rate is lower than the lower limit, it is difficult to secure the thickness of the cold-rolled steel sheet to be desired. When the reduction rate is higher than the upper limit, steel is excessively hardened to deteriorate rollability.

The annealing of the cold-rolled steel sheet is batch-annealing or continuously annealing the cold-rolled steel sheet in an annealing line, and for example, the continuous annealing may be performed in a temperature range of 600 to 800°C. When it is lower than the lower limit of the temperature range, the steel material is not sufficiently recrystallized, so that strength and ductility may be deteriorated due to high potential density. When it is higher than the upper limit of the temperature range, a problem such as heat buckle may easily occur during thin rolling.

After the annealing, the steel material is temper rolled. In an exemplary embodiment, in the temper rolling, a rolling rate may be in a range of 0.5 to 1.5%. The final steel material has an increased yield strength, when a yield point elongation occurs due to the presence of solid-solubilized C and N. Therefore, by controlling the rolling rate, occurrence of the yield point elongation may be suppressed.

When the rolling rate is too low, the material may be hardened by occurrence of the yield point elongation. When the rolling rate is too high, material hardening and an elongation decrease may occur by work hardening. In an exemplary embodiment, the final thickness of the steel material after temper rolling may be in a range of 0.5 to 3.0 mm.

In an exemplary embodiment, the method of manufacturing a cold-rolled steel sheet may include galvanizing after the cold rolling of the hot-rolled sheet to manufacture a cold-rolled steel sheet. The meaning of "after the cold rolling" may be after cold rolling and before annealing, after cold rolling and annealing and before temper rolling, or any time after temper rolling. Specifically, galvanizing may be performed after the temper rolling.

The galvanizing may use various plating methods such as, for example, hot dip galvanizing or electrogalvanizing.

In an exemplary embodiment, the hot-dip galvanizing may be performed in a plating bath in a temperature range of 400 to 500°C, specifically 420 to 480°C. When the hot-dip galvanizing is performed at a temperature lower than the lower limit of the temperature range, zinc is not sufficiently dissolved and not uniformly plated. When the temperature is higher than the upper limit of the temperature range, the plating bath volatilizes, the plating bath is sufficiently bound to a steel sheet during cooling to prevent formation of a sound structure, and the steel sheet melts during the plating process.

In an exemplary embodiment, anti-fingerprint resin coating may be performed after the electrogalvanizing. The coating may be performed in a temperature range of 100 to 200°C. For example, when the temperature is lower than the lower limit of the temperature range, the resin may be unevenly dried. When the temperature is higher than the upper limit of the temperature range, aging occurs in the drying process, so that a yield point increase due to yield point elongation may occur.

Hereinafter, the specific examples of the present disclosure will be described. However, the following examples is only a specific example of the present disclosure, and the present disclosure is not limited to the following examples.

Examples

Slab steels which had the compositions of the following Table 1 and included Fe and unavoidable impurities as the balance were manufactured, and the components were indicated as actual values.

(Table 1)

| Classification | Alloy component (wt%) | | | | | | Equation 1 | Equation 2 | $T_{BN}$ | $T_{MnS}$ | Equation 3 | Remarks |
|---|---|---|---|---|---|---|---|---|---|---|---|---|
| Component | C | Mn | S | B | N | Al | | | | | | |
| Inventive Steel 1 | 0.015 | 0.15 | 0.006 | 0.002 | 0.0021 | 0.02 | 15.0 | -0.005 | 1228 | 126 0 | 32.0 | Example 1 |
| Inventive Steel 2 | 0.011 | 0.15 | 0.006 | 0.002 | 0.0021 | 0.02 | 15.0 | -0.005 | 1228 | 126 0 | 32.0 | Example 2 |
| Inventive Steel 3 | 0.024 | 0.15 | 0.006 | 0.002 | 0.0021 | 0.02 | 15.0 | -0.005 | 1228 | 126 0 | 32.0 | Example 3 |
| Inventive Steel 4 | 0.015 | 0.12 | 0.006 | 0.002 | 0.002 | 0.02 | 14.3 | -0.006 | 1224 | 126 0 | 36.1 | Example 4 |

(continued)

| Classification | Alloy component (wt%) | | | | | | Equation 1 | Equation 2 | $T_{BN}$ | $T_{MnS}$ | Equation 3 | Remarks |
|---|---|---|---|---|---|---|---|---|---|---|---|---|
| Component | C | Mn | S | B | N | Al | | | | | | |
| Inventive Steel 5 | 0.015 | 0.24 | 0.006 | 0.002 | 0.002 | 0.02 | 14.3 | -0.006 | 1224 | 1260 | 36.1 | Example 5 |
| Inventive Steel 6 | 0.015 | 0.15 | 0.006 | 0.002 | 0.002 | 0.028 | 14.3 | -0.006 | 1224 | 1260 | 36.1 | Example6 |
| Inventive Steel 7 | 0.015 | 0.15 | 0.006 | 0.002 | 0.002 | 0.011 | 14.3 | -0.006 | 1224 | 1260 | 36.1 | Example 7 |
| Inventive Steel 8 | 0.015 | 0.15 | 0.0037 | 0.002 | 0.002 | 0.02 | 14.3 | -0.006 | 1224 | 1225 | 0.4 | Example 8 |
| Inventive Steel 9 | 0.015 | 0.15 | 0.009 | 0.002 | 0.002 | 0.02 | 14.3 | -0.006 | 1224 | 1305 | 81.1 | Example 9 |
| Inventive Steel 10 | 0.015 | 0.15 | 0.006 | 0.0011 | 0.002 | 0.02 | 10.2 | 0.005 | 1200 | 1260 | 59.6 | Example 10 |
| Inventive Steel 11 | 0.015 | 0.15 | 0.006 | 0.0025 | 0.002 | 0.02 | 14.3 | -0.012 | 1224 | 1260 | 36.1 | Example 11 |
| Inventive Steel 12 | 0.015 | 0.15 | 0.006 | 0.0025 | 0.0014 | 0.02 | 10.0 | -0.018 | 1200 | 1260 | 60.7 | Example 12 |
| Inventive Steel 13 | 0.015 | 0.15 | 0.006 | 0.002 | 0.0003 | 0.02 | 18.5 | 0.004 | 1248 | 1260 | 11.9 | Example 13 |
| Comparative Steel 1 | 0.03 | 0.15 | 0.006 | 0.002 | 0.0021 | 0.02 | 15.0 | -0.005 | 1228 | 1260 | 32.0 | Comparative Example 1 |
| Comparative Steel 2 | 0.015 | 0.05 | 0.006 | 0.002 | 0.0021 | 0.02 | 15.0 | -0.005 | 1228 | 1260 | 32.0 | Comparative Example 2 |
| Comparative Steel 3 | 0.015 | 0.27 | 0.006 | 0.002 | 0.0021 | 0.02 | 15.0 | -0.005 | 1228 | 1260 | 32.0 | Comparative Example 3 |
| Comparative Steel 4 | 0.015 | 0.15 | 0.006 | 0.002 | 0.0021 | 0.005 | 15.0 | -0.005 | 1228 | 1260 | 32.0 | Comparative Example 4 |
| Comparative Steel 5 | 0.015 | 0.15 | 0.006 | 0.002 | 0.0021 | 0.032 | 15.0 | -0.005 | 1228 | 1260 | 32.0 | Comparative Example 5 |
| Comparative Steel 6 | 0.015 | 0.15 | 0.0015 | 0.002 | 0.0021 | 0.02 | 15.0 | -0.005 | 1228 | 1193 | -35.5 | Comparative Example 6 |

(continued)

| Classification |  Alloy component (wt%) | | | | | | Equation 1 | Equation 2 | $T_{BN}$ | $T_{MnS}$ | Equation 3 | Remarks |
|---|---|---|---|---|---|---|---|---|---|---|---|---|
| Component | C | Mn | S | B | N | Al | | | | | | |
| Comparative Steel 7 | 0.015 | 0.15 | 0.012 | 0.002 | 0.0021 | 0.02 | 15.0 | -0.005 | 1228 | 1350 | 122.0 | Comparative Example 7 |
| Comparative Steel 8 | 0.015 | 0.15 | 0.006 | 0.0005 | 0.0021 | 0.02 | 4.6 | 0.014 | 1169 | 1260 | 91.5 | Comparative Example 8 |
| Comparative Steel 9 | 0.015 | 0.15 | 0.006 | 0.0027 | 0.0021 | 0.02 | 15.0 | -0.014 | 1228 | 1260 | 32.0 | Comparative Example 9 |
| Comparative Steel 10 | 0.015 | 0.15 | 0.006 | 0.002 | 0.0009 | 0.02 | 6.4 | -0.016 | 1179 | 1260 | 81.2 | Comparative Example 10 |
| Comparative Steel 11 | 0.015 | 0.15 | 0.006 | 0.002 | 0.0035 | 0.02 | 18.5 | 0.009 | 1248 | 1260 | 11.9 | Comparative Example 11 |

Among the steel slabs having the compositions of Table 1, Inventive Steel 1 as a standard was reheated at 1,200°C and hot rolled at 920°C, the hot-rolled steel sheet was wound and cold-rolled, the cold-rolled steel sheet was annealed, its temper rolling rate was controlled, and the precipitate, the crystal grain size, the material quality, and the defects of the steel materials as shown in Table 2 were confirmed.

(Table 2)

| Classification |  Precipitates | |  Ferrite grain size ($\mu$m) | |  Material | |  Defects | | |
|---|---|---|---|---|---|---|---|---|---|
| component | Fraction (%) | Particle size (nm) | Grain size of hot-rolled material | Grain size of cold-rolled material | Yield strength (MPa) | Elongation rate (%) | Surface defects | Working defects | Remarks |
| Inventive Steel 1 | 1.9 | 120 | 28.3 | 20.2 | 180 | 45 | X | X | Example 1 |
| Inventive Steel 2 | 1.8 | 110 | 29.2 | 19.5 | 195 | 43 | X | X | Example 2 |
| Inventive Steel 3 | 1.7 | 105 | 27.5 | 18.3 | 218 | 41.2 | X | X | Example 3 |
| Inventive Steel 4 | 1.5 | 85 | 21.5 | 15.6 | 196 | 43 | X | X | Example 4 |
| Inventive Steel 5 | 1.6 | 92 | 22.5 | 17.4 | 215 | 41 | X | X | Example 5 |
| Inventive Steel 6 | 1.9 | 120 | 28.2 | 20 | 181 | 45 | X | X | Example 6 |
| Inventive Steel 7 | 2 | 122 | 30.2 | 21.2 | 179 | 46 | X | X | exemplary embodiment 7 |

(continued)

| Classification | Precipitates | | Ferrite grain size ($\mu$m) | | Material | | Defects | | Remarks |
|---|---|---|---|---|---|---|---|---|---|
| component | Fraction (%) | Particle size (nm) | Grain size of hot-rolled material | Grain size of cold-rolled material | Yield strength (MPa) | Elongation rate (%) | Surface defects | Working defects | |
| Inventive Steel 8 | 2.1 | 130 | 32 | 22 | 168 | 46 | X | X | Example 8 |
| Inventive Steel 9 | 1.5 | 79 | 22 | 16.8 | 219 | 39 | X | X | Example 9 |
| Inventive Steel 10 | 1.6 | 90 | 24 | 17.3 | 210 | 42 | X | X | Example 10 |
| Inventive Steel 11 | 1.9 | 120 | 27.6 | 21.5 | 175 | 45 | X | X | Example 11 |
| Inventive Steel 12 | 1.5 | 85 | 19 | 16.5 | 210 | 41 | X | X | Example 12 |
| Inventive Steel 13 | 2 | 120 | 27.6 | 19.5 | 190 | 43 | X | X | Example 13 |
| Comparative Steel 1 | 1.9 | 120 | 28.3 | 20.2 | 225 | 42 | X | X | Comparative Example 1 |
| Comparative Steel 2 | 1.9 | 120 | 28.3 | 20.2 | 155 | 48 | X | X | Comparative Example 2 |
| Comparative Steel 3 | 1.9 | 120 | 28.3 | 20.2 | 230 | 41 | X | O | Comparative Example 3 |
| Comparative Steel 4 | 1.9 | 120 | 28.3 | 20.2 | 180 | 45 | X | O | Comparative Example 4 |
| Comparative Steel 5 | 1.9 | 120 | 28.3 | 20.2 | 180 | 45 | X | X | Comparative Example 5 |
| Comparative Steel 6 | 0.5 | 40 | 13.2 | 10.5 | 235 | 39 | X | O | Comparative Example 6 |
| Comparative Steel 7 | 0.4 | 42 | 13.8 | 10.9 | 231 | 41 | X | O | Comparative Example 7 |
| Comparative Steel 8 | 0.4 | 43 | 12.3 | 8.4 | 229 | 39 | X | X | Comparative Example 8 |
| Comparative Steel 9 | 0.3 | 35 | 9.5 | 9.3 | 242 | 35 | X | O | Comparative Example 9 |

(continued)

| Classification | Precipitates | | Ferrite grain size (μm) | | Material | | Defects | | Remarks |
|---|---|---|---|---|---|---|---|---|---|
| component | Fraction (%) | Particle size (nm) | Grain size of hot-rolled material | Grain size of cold-rolled material | Yield strength (MPa) | Elongation rate (%) | Surface defects | Working defects | |
| Comparative Steel 10 | 0.5 | 40 | 12.6 | 8.6 | 250 | 32 | X | O | Comparative Example 10 |
| Comparative Steel 11 | 1.9 | 65 | 15.6 | 14 | 235 | 39 | X | O | Comparative Example 11 |

The fraction and particle size of the precipitate, the hot-rolled material crystal grain size, the cold-rolled material crystal grain size, the yield strength, the elongation rate, and whether the surface defects and working defects occurred, in the inventive steels and the comparative steels were confirmed, by referring to Table 2. The surface defects were determined depending on whether the surface defects of the steel material having a length of 5 mm or more occurred, and the working defects were determined depending on whether cracks having a length of 2 mm or more occurred in a working area after a V-bending working test. The V-bending working test was performed under normal conditions, and the steel material was placed on a V-shaped die and a moving speed of the die was controlled within 5 mm/min.

In Examples 1 to 13, as a result of confirming the material quality of the upper/lower limits, it was confirmed that the yield strength satisfied 220 MPa or less and surface defects and working defects did not occurred, by referring to Table 2. In Comparative Example 1, it was confirmed that when the content of carbon (C) was increased, the yield strength was increased.

In Comparative Examples 2 and 3, an influence of the content of manganese (Mn) was reviewed. In Comparative Example 2 in which manganese (Mn) was present in an excessively small amount, the yield strength was decreased due to a decrease in solid solution strengthening effect of the manganese, and in Comparative Example 3 in which the manganese was present in an excessively large amount, the yield strength was excessively increased, and thus, distortion occurrence of the steel material was confirmed.

In Comparative Examples 4 and 5, an influence of the content of aluminum (Al) was reviewed. In Comparative Example 4 in which the content of aluminum was excessively low, the aluminum did not have sufficient deoxidizing ability, so that many calcium (Ca) and manganese (Mn)-based inclusions occurred to cause cracks. In Comparative Example 5 in which the aluminum was present in an excessively large amount, economic feasibility was poor. Since in the present disclosure, the content of aluminum only needs to be secured to a deoxidation level, the aluminum does not need to be excessively added. Therefore, lowering the content of aluminum to a required range level was not consistent with the direction of the present disclosure to provide an extremely thin steel material which secures economic feasibility, has excellent press workability, has no defect occurrence such as cracks during forming, and has high strength.

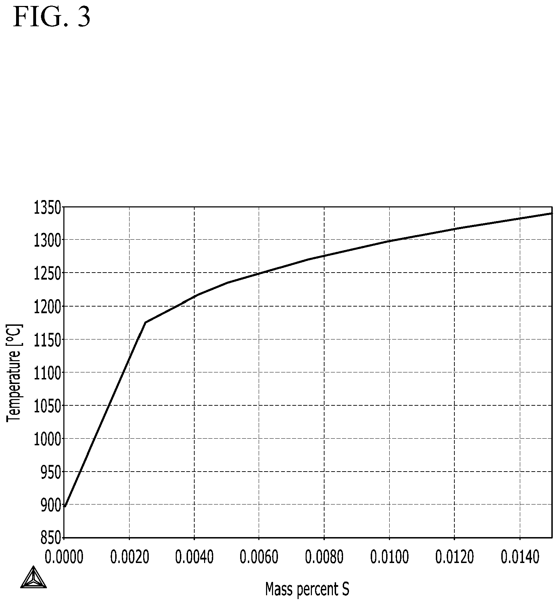

In Comparative Examples 6 and 7, an influence of the content of sulfur (S) was reviewed. In Comparative Example 6 in which the amount of sulfur added was excessively small, the amount of the precipitate of MnS was low, and also its precipitation temperature became lower than that of BN, so that the precipitation effect did not occur, and the effects of crystal grain refinement and strength reduction did not occur. In Comparative Example 7 in which the amount of sulfur added was excessively large, the precipitation temperature of MnS rose, so that MnS was coarsely precipitated, and thus, the composite precipitation with BN did not occur and there was no effect of strength reduction. In addition, referring to FIG. 3, it is confirmed that BN and MnS precipitation temperatures changed depending on the change in the content of S, in 0.015 wt% C - 0.15 wt% Mn - 0.02 wt% Al - 20 ppm B, N base calculated by a Thermocalc. program. Therefore, it is confirmed from the calculation results that in the base of the component system, the precipitation temperatures of BN and MnS were reversed from the content of S of 0.003% as a starting point.

In Comparative Examples 8 to 11, an influence of the contents of boron (B) and nitrogen (N) which are the main factors of BN precipitation was reviewed. Since the contents of boron and nitrogen were present at similar levels, precipitation was controlled by the component having a lower content between the two as an atomic ratio. As in Equation 1, it was important to have minimum atomic weights of boron and nitrogen, and as in Equation 3, at the contents of boron and nitrogen, a difference in precipitation temperature was 0 to 100°C or less. In Comparative Example 8 in which the content of boron was excessively low, the precipitation temperature of BN was low, so that BN was re-solid-solubilized in a heating furnace, and thus, the precipitation strengthening effect did not occur. In Comparative Example 9 in which the content of boron was excessively high, the boron was segregated as Free B at the grain boundary to cause a pinning effect, and also deteriorate hot rollability and increase strength.

In Comparative Example 10 in which the content of nitrogen was excessively low, the BN precipitation temperature was lowered as in the content of boron, so that the coarsening effect did not occur. In Comparative Example 11 in which the content of nitrogen was excessively high, AlN was not sufficiently formed with nitrogen within the content of aluminum according to an exemplary embodiment of the present disclosure, which caused strength increase due to aging.

In the following Tables 3 and 4, changes in steel material characteristics depending on the manufacturing conditions based on the component system of Example 1 among the steel slabs having the compositions of Table 1 are observed. In the following Table 3, the reheating temperature, the finish rolling temperature, the winding temperature, the cold reduction rate, the annealing temperature, and the temper rolling rate were changed among the manufacturing conditions, and in the following Table 4, the fraction, the particle size, the crystal grain size, the yield strength, the elongation rate, and the defects such as surface defects and working defects of the precipitate of the steel materials manufactured according to the conditions of Table 3 may be confirmed.

(Table 3)

| Classificati on | Reheating temperature (°C) | Finish rolling temperatur e (°C) | Winding temperatur e (°C) | Cold reduction rate (%) | Annealing temperatur e (°C) | Temper rolling rate (%) |
|---|---|---|---|---|---|---|
| Manufactu ring Method 1 | 1200 | 920 | 660 | 75 | 700 | 1.0 |
| Manufactu ring Method 2 | 1250 | 920 | 660 | 75 | 700 | 1.0 |
| Manufactu ring Method 3 | 1200 | 920 | 730 | 75 | 820 | 1.0 |
| Manufactu ring Method 4 | 1200 | 920 | 400 | 75 | 820 | 1.0 |
| Manufactu ring Method 5 | 1200 | 920 | 660 | 75 | 820 | 0.5 |
| Manufactu ring Method 6 | 1200 | 920 | 660 | 75 | 820 | 2.0 |

(Table 4)

| Classif ication | Manuf acturin g metho d | Precipitate | | Ferrite grain size [μm] | | Material | | Defects | | |
|---|---|---|---|---|---|---|---|---|---|---|
| Comp onent | Manuf acturin g metho d | Fractio n [%] | Particl e size [nm] | Hot-rolled materi al grain size | Cold-rolled materi al grain size | Yield strengt h [MPa] | Elonga tion rate [%] | Surfac e defect s | Workin g defect s | Remar ks |
| Inventi ve Steel 1 | Manuf acturin g Metho d 1 | 1.9 | 120 | 28.3 | 20.2 | 180 | 45 | X | X | Examp le 1 |
| Inventi ve Steel 1 | Manuf acturin g Metho d 2 | 0.5 | 40 | 12.6 | 9.8 | 245 | 38 | X | O | Comp arative Examp le 12 |

(continued)

| Classification | Manufacturing method | Precipitate | | Ferrite grain size [μm] | | Material | | Defects | | |
|---|---|---|---|---|---|---|---|---|---|---|
| Component | Manufacturing method | Fraction [%] | Particle size [nm] | Hot-rolled material grain size | Cold-rolled material grain size | Yield strength [MPa] | Elongation rate [%] | Surface defects | Working defects | Remarks |
| Inventive Steel 1 | Manufacturing Method 3 | 1.9 | 120 | 28.3 | 20.2 | 180 | 45 | O | X | Comparative Example 13 |
| Inventive Steel 1 | Manufacturing Method4 | 1.9 | 120 | 14.9 | 12.2 | 245 | 39 | X | O | Comparative Example 14 |
| Inventive Steel 1 | Manufacturing Method 5 | 1.9 | 120 | 28.3 | 20.2 | 225 | 42 | O | X | Comparative Example 15 |
| Inventive Steel 1 | Manufacturing Method6 | 1.9 | 120 | 28.3 | 20.2 | 235 | 38 | O | O | Comparative Example 16 |

In Tables 3 and 4, Comparative Example 12 is for reviewing an influence of a slab reheating temperature (SRT). When the slab reheating temperature was as high as 1,250°C, precipitates such as BN and MnS were re-solid-solubilized, and thus, it was difficult to produce coarse precipitates such as BN and MnS at a cooling rate in a hot rolling level and there was no strength reduction effect.

In Comparative Examples 13 and 14, an influence of the winding temperature was reviewed. In Comparative Example 13 in which the winding temperature was excessively high, it was confirmed that crystal grain coarsening occurred due to the high winding temperature to have a strength reduction effect, but surface defects occurred due to oxidation of carbon (C) on the surface. In Comparative Example 14 in which the winding temperature was excessively low, it was difficult to secure the strength reduction effect due to the reduction of hot-rolled crystal grain size and the reduction of cold-rolled crystal grain size.

In Comparative Examples 15 and 16, an influence of the temper rolling rate was reviewed. Since the steel material of the present disclosure included the C content, aging was prevented only by forming operation potential by elongation through a temper rolling mill (Skin Pass Mill, SPM). In Comparative Example 15 in which the temper rolling rate was excessively low, the elongation rate of the steel material was increased due to aging occurrence. In Comparative Example 16 in which the temper rolling rate was excessively high, the elongation rate was increased due to work hardening, and thus, the temper rolling reduction rate of the present disclosure was limited to ± 0.5% or less. The present disclosure is not limited by the exemplary embodiments and/or the examples and may be manufactured in various forms different from each other, and it may be understood that a person with ordinary skill in the art to which the present disclosure pertains may carry out the present disclosure in another specific form without modifying the technical idea or essential feature of the present disclosure. Therefore, it should be understood that the exemplary embodiments and/or the examples described above are illustrative and are not restrictive in all aspects.

**Claims**

1. A cold-rolled steel sheet comprising, by weight: 0.010 to 0.025% of carbon (C), 0.10 to 0.25% of manganese (Mn), 0.002 to 0.011% of sulfur (S), 0.0006 to 0.0026% of boron (B), 0.0010 to 0.0034% of nitrogen (N), and 0.006 to 0.028% of aluminum (Al) with a balance of Fe and unavoidable impurities, and

   comprising a precipitate of at least one of MnS and BN,
   wherein an area fraction of the precipitate in the cold-rolled steel sheet is 1 to 10% and
   the cold-rolled steel sheet has a yield strength of 150 to 220 MPa.

2. The cold-rolled steel sheet of claim 1, wherein:

   the cold-rolled steel sheet satisfies the following Equation 1:

   <Equation 1>

   $$100,000 \times \min ([B]/10.8, [N]/14) > 9.25$$

   wherein min (a, b) is a smaller value between a and b, and [B] and [N] are contents (wt%) of B and N.

3. The cold-rolled steel sheet of claim 1, wherein:

   the cold-rolled steel sheet satisfies the following Equation 2:

   <Equation 2>

   $$([N]-1.3 \times [B]) \times 9.643 < 0.015$$

   wherein [B] and [N] are contents (wt%) of B and N.

4. The cold-rolled steel sheet of claim 1, wherein:

   the cold-rolled steel sheet satisfies the following Equation 3:

   <Equation 3>

   $$0 < T_{MnS} - T_{BN} < 100$$

   wherein $T_{BN}$ is $573,198 \times \min ([B]/10.8, [N]/14) +1142$, min (a, b) is a smaller value between a and b, $T_{MnS}$ is $15000 \times [S] +1170$, and [B], [N], and [S] are contents (wt%) of B, N, and S.

5. The cold-rolled steel sheet of claim 1, wherein:
   an average particle diameter of the precipitate is 40 to 250 nm.

6. The cold-rolled steel sheet of claim 1, wherein:
   an average particle diameter of ferrite is 10 to 40 $\mu$m.

7. The cold-rolled steel sheet of claim 1, wherein:
   the cold-rolled steel sheet has an elongation rate of 35 to 48%.

8. A galvanized steel sheet which is obtained by hot-dip galvanizing the cold-rolled steel sheet of any one of claims 1 to 7.

9. A method of manufacturing a cold-rolled steel sheet, the method comprising:

   reheating a slab including, by weight: 0.010 to 0.025% of carbon (C), 0.10 to 0.25% of manganese (Mn), 0.002 to 0.011% of sulfur (S), 0.0006 to 0.0026% of boron (B), 0.0010 to 0.0034% of nitrogen (N), and 0.006 to 0.028% of aluminum (Al) with a balance of Fe and unavoidable impurities at 1,100°C or higher and lower than 1,250°C; hot rolling the heated slab to manufacture a hot-rolled steel sheet; winding the hot-rolled steel sheet at a winding temperature in a range of 450 to 700°C; cold rolling the wound hot-rolled steel sheet to manufacture a cold-rolled steel sheet; annealing the cold-rolled steel sheet; and temper rolling the cold-rolled steel sheet at a rolling rate of more than 0.5% and less than 1.5%.

10. The method of manufacturing a cold-rolled steel sheet of claim 9, wherein:

in the heating of a slab,
the slab is heated to 1,200°C or higher.

11. The method of manufacturing a cold-rolled steel sheet of claim 9, wherein:

in the manufacturing of a hot-rolled steel sheet,
a finish rolling temperature is $Ar_3$ or higher.

12. The method of manufacturing a cold-rolled steel sheet of claim 9, wherein:

the manufacturing of a cold-rolled steel sheet is
performed by cold rolling at a reduction rate of 50 to 95%.

13. The method of manufacturing a cold-rolled steel sheet of claim 9, further comprising:

after the manufacturing of a cold-rolled steel sheet,
galvanizing a surface of the cold-rolled steel sheet.

FIG. 1

FIG. 2

# FIG. 3

<table>
<tr><td colspan="2">INTERNATIONAL SEARCH REPORT</td><td colspan="2">International application No.<br>**PCT/KR2022/020640**</td></tr>
</table>

**A. CLASSIFICATION OF SUBJECT MATTER**

**C22C 38/04**(2006.01)i; **C22C 38/00**(2006.01)i; **C22C 38/06**(2006.01)i; **C22C 38/60**(2006.01)i; **C21D 8/02**(2006.01)i; **C23C 2/06**(2006.01)i; **B21C 47/02**(2006.01)i

According to International Patent Classification (IPC) or to both national classification and IPC

**B. FIELDS SEARCHED**

Minimum documentation searched (classification system followed by classification symbols)

C22C 38/04(2006.01); C21D 8/02(2006.01); C21D 8/04(2006.01); C21D 9/46(2006.01); C22C 38/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 프레스 성형(press forming), 냉연강판(cold rolled sheet), 조질압연(skin pass mill), 페라이트(ferrite), 석출물(precipitate)

**C. DOCUMENTS CONSIDERED TO BE RELEVANT**

| Category* | Citation of document, with indication, where appropriate, of the relevant passages | Relevant to claim No. |
|---|---|---|
| X | WO 2015-037787 A1 (POSCO) 19 March 2015 (2015-03-19)<br>See paragraphs [0073] and [0118], claims 1-3, 6-7 and 9 and tables 2-3. | 1-13 |
| A | KR 10-2000-0034959 A (KAWASAKI STEEL CORPORATION) 26 June 2000 (2000-06-26)<br>See claims 1-2. | 1-13 |
| A | KR 10-2013-0070684 A (POSCO) 28 June 2013 (2013-06-28)<br>See claims 1 and 4. | 1-13 |
| A | JP 2003-321732 A (JFE STEEL K.K.) 14 November 2003 (2003-11-14)<br>See claims 1-5. | 1-13 |
| A | KR 10-2009-0122366 A (JFE STEEL CORPORATION) 27 November 2009 (2009-11-27)<br>See claims 1-4 and 11. | 1-13 |

☐ Further documents are listed in the continuation of Box C.   ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **17 March 2023** | **17 March 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.

**PCT/KR2022/020640**

| Patent document cited in search report | | | Publication date (day/month/year) | Patent family member(s) | | | Publication date (day/month/year) |
|---|---|---|---|---|---|---|---|
| WO | 2015-037787 | A1 | 19 March 2015 | CN | 105531386 | A | 27 April 2016 |
| | | | | CN | 105531386 | B | 27 March 2018 |
| | | | | KR | 10-1518581 | B1 | 07 May 2015 |
| | | | | KR | 10-2015-0031118 | A | 23 March 2015 |
| | | | | PL | 240803 | B1 | 06 June 2022 |
| | | | | PL | 416418 | A1 | 11 September 2017 |
| KR | 10-2000-0034959 | A | 26 June 2000 | JP | 2000-158888 | A | 13 June 2000 |
| | | | | KR | 10-0605835 | B1 | 31 July 2006 |
| KR | 10-2013-0070684 | A | 28 June 2013 | KR | 10-1353805 | B1 | 22 January 2014 |
| JP | 2003-321732 | A | 14 November 2003 | JP | 3760888 | B2 | 29 March 2006 |
| KR | 10-2009-0122366 | A | 27 November 2009 | CN | 101663412 | A | 03 March 2010 |
| | | | | CN | 101663412 | B | 18 July 2012 |
| | | | | EP | 2138596 | A1 | 30 December 2009 |
| | | | | EP | 2138596 | B1 | 29 July 2015 |
| | | | | JP | 2008-274332 | A | 13 November 2008 |
| | | | | JP | 5135868 | B2 | 06 February 2013 |
| | | | | US | 2010-0116832 | A1 | 13 May 2010 |
| | | | | US | 8795443 | B2 | 05 August 2014 |
| | | | | WO | 2008-136290 | A1 | 13 November 2008 |

Form PCT/ISA/210 (patent family annex) (July 2022)